# EUROPEAN PATENT APPLICATION

(11) **EP 2 407 524 A1**
(43) Date of publication of application: **18.01.2012**
(21) Application number: 10290396.0
(22) Date of filing: 15.07.2010
(51) Int. Cl.: C09K 8/504, C09K 8/508, C09D 163/00

(54) **Compositions and methods for servicing subterranean wells**

(71) Applicant: Services Pétroliers Schlumberger, 75007 Paris (FR); Schlumberger Technology B.V., 2514 JG The Hague (NL); Schlumberger Holdings Limited (SHL), Tortola (VG); PRAD Research and Development Limited, Road Town, Tortola (VG)
(72) Inventor: Carelli, Clara, 75014 Paris (FR); Le Roy-Delage, Sylvaine, 75015 Paris (FR)
(74) Representative: Vandermolen, Mathieu

(57) **Abstract**

Fluid compositions comprising an aqueous epoxy resin, a hardener and particles comprising silica, aluminosilicate or both are useful for establishing hydraulic isolation in cemented subterranean wells. Upon entering voids and cracks in or adjacent to the cement sheath, and contacting the set-cement surfaces, the composition reacts and forms a seal that prevents further leakage.

## Description

### BACKGROUND OF THE INVENTION

The statements in this section merely provide background information related to the present disclosure and may not constitute prior art.

This invention relates to methods for servicing subterranean wells, in particular, fluid compositions and methods for remedial operations during which the fluid compositions are pumped into a wellbore and make contact with well cements placed during primary cementing or previous remedial cementing operations.

During construction of a subterranean well, remedial operations may be required to maintain wellbore integrity during drilling, to cure drilling problems, or to repair defective primary cement jobs. Wellbore integrity may be compromised when drilling through mechanically weak formations, leading to hole enlargement. Cement slurries may be used to seal and consolidate the borehole walls. Remedial cementing is a common way to repair defective primary cement jobs, to either allow further drilling to proceed or to provide adequate zonal isolation for efficient well production.

During well production, remedial cementing operations may be performed to restore production, change production characteristics (e.g., to alter the gas/oil ratio or control water production), or repair corroded tubulars. During a stimulation treatment, the treatment fluids must enter the target zones and not leak behind the casing. If poor zonal isolation behind the production casing is suspected, a remedial cementing treatment may be necessary.

Well abandonment frequently involves placing cement plugs to ensure long-term zonal isolation between geological formations, replicating the previous natural barriers between zones. However, before a well can be abandoned, annular leaks must be sealed. Squeeze cementing techniques may be applied for this purpose.

Common cementitious-fluid systems employed during squeeze-cementing operations include, but are not limited to, Portland cement slurries, calcium-aluminate cement slurries, and organic resins based on epoxies or furans.

Portland cement slurries prepared from, for example, ISO/API Class H or Class G cement, are by far the most common cementitious fluids employed in remedial cementing operations. They perform satisfactorily in many applications; however, when the size of the void from which fluid leakage occurs is very small, the cement-particle size may be too large to enter and seal the void. This problem has been mitigated to a significant extent by grinding Portland cement clinker to a finer particle-size distribution. An example of a fine-particle-size, or microfine, Portland cement system is disclosed in US 6,312,515, such systems are generally capable of sealing voids or cracks as small as about 100 micrometers.

Despite the success of microfine cements, leaks may still occur when the voids or cracks in the cement sheath are smaller than 100 micrometers. It is therefore desirable to provide means to seal such small voids and cracks in or adjacent to the cement sheath and provide zonal isolation.

### SUMMARY OF THE INVENTION

The present invention provides means to seal voids and cracks in or adjacent to a cement sheath in a subterranean well, and thus restore zonal isolation.

In a first aspect, the present invention discloses pumpable fluid compositions with the ability to enter and seal cement-sheath voids and cracks smaller than 100 micrometers. It will be appreciated that, although the primary focus is to seal voids and cracks smaller than 100 micrometers, the invention may be useful with other cracks size.

The fluid compositions according to the present invention comprise suspensions of silica particles, aluminosilicate particles or both. The silica particles may comprise colloidal silica, silica fume, or both. The aluminosilicate particles may comprise fly ash, blast-furnace slag, metakaolin or combinations thereof. The composition further comprises an aqueous epoxy resin and hardener. Upon entering voids and cracks in or adjacent to the cement sheath and contacting the set-cement surfaces, the silicate suspension reacts and forms a seal that prevents further leakage. The epoxy-resin system further reinforces the seal.

In another aspect, the present invention aims at a method for restoring hydraulic isolation in a cemented subterranean well comprising providing a pumpable sealant composition containing an aqueous epoxy resin, a hardener and particles comprising silica, aluminosilicate or both. The sealant composition is pumped into voids in or adjacent to a cement sheath until the suspension reacts and forms a seal. The method may further comprise pumping a spacer fluid ahead of the silica suspension, the spacer fluid comprising a pH buffer, soluble salts, multivalent-ion sequestering agents, or combinations thereof.

In yet another aspect, the present invention aims at a method for servicing a cemented subterranean well.

### BRIEF DESCRIPTION OF THE DRAWINGS

For a more complete understanding of the present invention, and the advantages thereof, reference is now made to the following descriptions taken in conjunction with the accompanying figures.

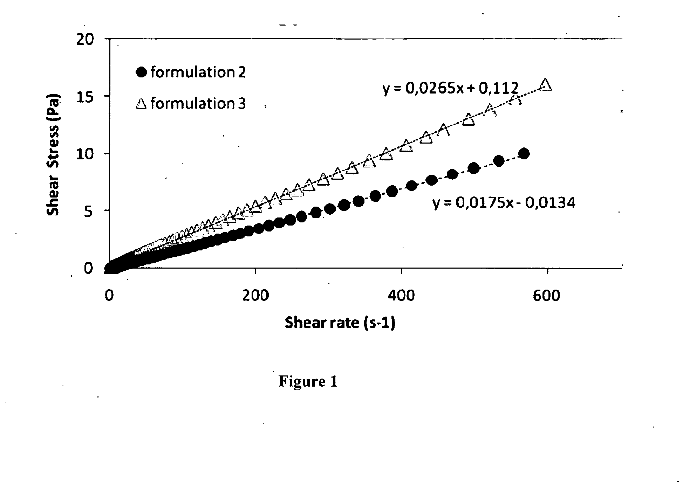

Figure 1 is a plot showing the rheological behavior of fluids of the invention.

### DETAILED DESCRIPTION

At the outset, it should be noted that in the development of any such actual embodiment, numerous implementations or specific decisions must be made to achieve the developer's specific goals, such as compliance with system related and business related constraints, which will vary from one implementation to another. Moreover, it will be appreciated that such a development effort might be complex and time consuming but would nevertheless be a routine undertaking for those of ordinary skill in the art having the benefit of this disclosure. In addition, the composition used/disclosed herein may also comprise some components other than those cited. In the summary of the invention and this detailed description, each numerical value should be read once as modified by the term "about" (unless already expressly so modified), and then read again as not so modified unless otherwise indicated in context. Also, in the summary of the invention and this detailed description, it should be understood that a concentration range listed or described as being useful, suitable, or the like, is intended that any and every concentration within the range, including the end points, is to be considered as having been stated. For example, "a range of from 1 to 10" is to be read as indicating each and every possible number along the continuum between about 1 and about 10. Thus, even if specific data points within the range, or even no data points within the range, are explicitly identified or refer to only a few specific points, it is to be understood that inventors appreciate and understand that any and all data points within the range are to be considered to have been specified, and that inventors possessed knowledge of the entire range and all points within the range.

Unless stated the contrary, percentages by weight mentioned in the present specification are percentages by total weight of the composition.

The inventors have surprisingly discovered that a pumpable composition comprising an aqueous epoxy resin, a hardener and particles comprising silica, aluminosilicate or both will upon entering voids or cracks that are in contact with Portland cement, gel and form a seal. Without being bound by any theory, it is believed that the particles react with residual calcium hydroxide in the set Portland cement to form calcium silicate hydrate (C-S-H) gel. This is known in the art as a pozzolanic reaction. Set Portland cement contains roughly 20 wt% calcium hydroxide when cured below 110°C. At higher temperatures, calcium silicate hydrate gel reacts with and consumes the residual calcium silicate hydrate to form other calcium silicate hydrate minerals such as alpha-dicalcium silicate hydrate, tobermorite, xonotlite and truscottite. The epoxy resin and hardener react and further reinforce the seal created by the pozzolanic reaction.

It will be appreciated that the compositions of the invention may respond to other cements that provide multivalent ions including, but not limited to, lime/silica blends, lime/pozzolan blends, calcium aluminate cement, Sorel cement, chemically modified phosphate ceramics and geopolymers.

The aqueous epoxy resin preferably comprises bisphenol A novalac resin. The hardener may comprise one or more members of the list comprising an aliphatic amine, a dicyandiamide-imidazole based compound and a polyamine. The epoxy-resin concentration may preferably be between about 10 wt% and 40 wt%, and more preferably between about 10 wt% and 30 wt%. The hardener concentration may preferably be between about 5 wt% and 40 wt%, and more preferably between about 5 wt% and 10 wt%.

The silica-particle suspensions may be, but are not limited to, silica-fume suspensions, colloidal-silica suspensions or both. A typical silica-fume suspension is Microblok™ from Elkem. Sources of colloidal-silica suspensions include Ludox™ products from Grace Davison, Bindzil™ products from Akzo Nobel, NexSil™ and Nyacol™ products from Nyacol Nano Technologies, Inc. and Kostrosol™ and Kostrosorb™ products from Chemiwerk Bad Kostritz. The aluminosilicate particles may comprise fly ash, blast-furnace slag, metakaolin and combinations thereof.

The particle size of the silica particles, aluminosilicate particles or both is preferably between about 5 nm and 5 µm, and more preferably between about 5 nm and 150 nm.

The concentration of silica particles, aluminosilicate particles or both is preferably between about 40 wt% and 80 wt%. More preferably the silica particles are colloidal silica and the aluminosilicate particles are colloidal aluminisilicate.

The inventors also envision incorporating particles in the composition that would act as tracers, allowing operators to verify that the composition has been placed at the correct location. For example, silver, copper or gold particles may be added to increase the electrical conductivity of the composition. Another approach may involve adding aluminum particles and metallic fibers to increase the thermal conductivity of the formulation.

The rate at which, or the degree to which, silica-suspension gelation occurs may be modified by adjusting the chemical environment. This is illustrated in the textbook entitled The Chemistry of Silica by R.K. Iler, John Wiley & Sons (1979). Inspection of Fig. 4.13 in the textbook shows that adjusting the pH, adding electrolytes and adding water-miscible organic liquids affects the gelation behavior of colloidal-silica suspensions. Lowering the pH will generally slow down gelation, and this may be accomplished by pumping an alkaline spacer ahead of the silica suspension or adding a buffer to the silica suspension. Water miscible organic liquids such as alcohols also retard gelling. On the other hand, adding electrolytes such as sodium chloride generally accelerates gelation.

The reaction between the silica particles and calcium hydroxide to form calcium silicate hydrate gel may be controlled by adding multivalent-cation sequestering agents. Reducing the availability of calcium ions will retard the reaction. The inventors envision adding chelating agents based on ethylenediaminetetraacetic acid (EDTA), diethylenetriaminepentaacetic acid (DTPA), hydroxyethylethylenediaminetriacetic acid (HEDTA), hydroxyethyliminodiacetic acid (HEIDA) and triethanolamine. It will be appreciated that this list is not exhaustive, and the present invention is not limited to amine-base chelating agents.

The present invention also encompasses a method for restoring hydraulic isolation in a cemented subterranean well, comprising pumping a composition comprising aqueous epoxy resin, a hardener, and silica particles, aluminosilicate particles or both into the well. The composition enters voids, cracks or both into or adjacent to the cement sheath. The silica particles react with the cement sheath, form a seal and establish hydraulic isolation. The epoxy resin and hardener react to further reinforce the seal. The placement method may further comprise controlling the rate at which the silica particles react with the set cement to form a seal by pumping an acidic spacer fluid ahead of the silica suspension, including an acidic buffer in the silica suspension, including multivalent-cation sequestering agents in the silica suspension, or a combination thereof.

The primary focus of the method is wells cemented with Portland cement. However, it will be appreciated that the compositions of the invention may respond to other cements that provide multivalent ions including, but not limited to, lime/silica blends, lime/pozzolan blends, calcium aluminate cement, Sorel cement, chemically modified phosphate ceramics and geopolymers.

The placement method may incorporate a variety of remedial techniques known to those skilled in the art, and coiled tubing may be used to convey the suspensions into the well. Another placement method involves the Cased Hole Dynamics Tester (CHDT), available from Schlumberger, and described in US Patent 5,195,588 and Schlumberger Publication FE_03_002_2, "CHDT Cased Hole Dynamics Tester," June 2003. The CHDT tool is normally used to extract formation-fluid samples from the subterranean well and also to perform pressure tests. Rather than using the CHDT for fluid extraction, the inventors envision the opposite—using the tool to inject the silica suspensions.

### EXAMPLES

The following examples serve to further illustrate the invention. All the examples involve formulations described in Table 1. The formulations are blends of colloidal silica, waterborne epoxy resin and hardener. The plastic viscosities of the formulations, determined by applying the Bingham model, are also presented.

**Table 1. Compositions of blends tested in the examples.**

| **Formulation** | **1** | **2** | **3** | **4** |
|---|---|---|---|---|
| Colloidal silica (wt %) | **100** | 80 | 70 | 80 |
| EPI-REZ-5003-W-55 (wt %) | 0 | 14 | 21 | 20 |
| Epikure 6870-W-53 (wt %) | 0 | 6 | 9 | **0** |
| **Pᵥ** (cP) | 8 | 17 | 26 | **36** |

The colloidal silica was Microblok, supplied by Elkem AS, Oslo, Norway. The epoxy resin, EPI-REZ-5003-W-55, is available from Hexion Specialty Chemicals, Columbus, Ohio USA. The hardener, Epikure 6870-W-53, is also available from Hexion Specialty Chemicals.

Formulation 1 is a control system containing only colloidal silica. Formulations 2 and 3 feature both resin and hardener. Formulation 4 does not contain the hardener.

### EXAMPLE 1

Rheological measurements were performed on Formulations 2 and 3. As shown in Fig. 1, the fluids present almost Newtonian behavior, and are significantly less viscous than most cement slurries.

### EXAMPLE 2

Experiments were performed to evaluate the adhesive properties of the fluid formulations described in Table 1. Portland-cement cores (height: 5 cm; diameter: 2.5 cm) were prepared. The cores were made with a 1900-kg/m³ neat Class G cement slurry. After curing at ambient temperature, the cores were cut vertically into two halves. One of the flat surfaces was covered with a thin layer of a formulation, and the halves were joined. After 30 minutes, the adhesion strength was assessed qualitatively (Table 2).

**Table 2. Adhesion and durability test results.**

| | **Formulation** | | | |
|---|---|---|---|---|
| **Adhesion** | **1** | **2** | **3** | **4** |
| **After 30 minutes** | weak | strong | strong | Medium |
| **In water** | < 10 minutes | < 24 hr | No failure after 30 days | < 1hr |

Durability of the adhesion was tested by immersing the glued cement cores in water, and periodically examining them. As shown in Table 2, the best results were obtained when both the epoxy resin and hardener were present.

### EXAMPLE 3

A series of Brazilian tensile-strength measurements were performed to quantify the performance of the silica/resin blends. The test method is described in the following publication: Dargaud B and Boukhelifa L: "Laboratory Testing, Evaluation and Analysis of Well Cements," in Nelson EB and Guillot D (eds.): Well Cementing-2nd Edition, Schlumberger, Houston (2006) 627-657.

Tensile-strength measurements were measured from unbroken cores and cores repaired with one of the formulations from Table 1. Following the method described in Example 2, the thickness of the coating formulations was less than 200 µm. The cores were cured in water at room temperature for 24 hours, then the tensile-strength measurement was performed. The results, presented in Table 3, indicate that about 60% of the original strength may be restored.

**Table 3. Tensile-strength measurements from 1900-kg/m³ cement cores before cracking and after repair.**

| | **Tensile strength (MPa)** | |
|---|---|---|
| **Formulation** | **no crack** | **Repaired sample** |
| 1 | 2.4 | 1.3 |
| 2 | 2.3 | 1.5 |
| 3 | 2.3 | 1.1 |
| 4 | 2.5 | 1.5 |

Although various embodiments have been described with respect to enabling disclosures, it is to be understood the invention is not limited to the disclosed embodiments. Variations and modifications that would occur to one of skill in the art upon reading the specification are also within the scope of the invention, which is defined in the appended claims.

## Claims

1. A pumpable sealant composition for restoring hydraulic isolation in a cemented subterranean well, comprising:
(i) an aqueous epoxy resin;
(ii) a hardener; and
(iii) a suspension of silica particles, aluminosilicate particles or both.

2. The composition of claim 1, wherein the epoxy resin comprises bisphenol A novalac resin.

3. The composition of claim 1, wherein the hardener comprises one or more members of the list comprising: an aliphatic amine, a dicyandiamide-imidazole based compound, and a polyamine.

4. The composition of claim 1, wherein the particle size of the silica, aluminosilicate or both is between about 5 nm and 5 µm.

5. The composition of claim 1, wherein the aluminosilicate comprises one or more members of the list comprising: fly ash, blast furnace slag and metakaolin.

6. The composition of claim 1, wherein the concentration of silica particles, aluminosilicate particles or both is between about 40 wt% and 80 wt%.

7. The composition of claim 1, wherein the concentration of aqueous epoxy resin is between about 10 wt% and 40 wt%.

8. The composition of claim 1, wherein the concentration of hardener is between about 5 wt% and 40 wt%.

9. The composition of claim 1, further comprising a tracer.

10. A method for restoring hydraulic isolation in a cemented wellbore in contact with a subterranean formation, comprising:
(i) providing a sealant composition comprising an aqueous epoxy resin, a hardener and silica particles, aluminosilicate particles or both;
(ii) pumping the sealant composition into voids in or adjacent to a cement sheath; and
(iii) allowing the sealant to react with the set cement and form a seal.

11. The method of claim 10, wherein the cement sheath comprises one or more members of the list comprising Portland cement, a lime/silica blend, a lime/pozzolan blend, calcium aluminate cement, Sorel cement, chemically modified phosphate ceramic and geopolymer.

12. A method of servicing a cemented wellbore in contact with a subterranean formation, comprising:
(i) providing a sealant composition comprising an aqueous epoxy resin, a hardener and silica particles, aluminosilicate particles or both;
(ii) pumping the sealant composition into voids in or adjacent to a Portland-cement sheath; and
(iii) allowing the sealant to react with the set cement and form a seal.

13. The method of claim 11, wherein the concentration of silica, aluminosilicate or both is between about 40 wt% and 80 wt%.

14. The method of claim 11, wherein the concentration of aqueous epoxy resin is between about 10 wt% and 40 wt%.

15. The method of claim 11, wherein the concentration of hardener is between about 5 wt% and 40 wt%.
